# EUROPÄISCHE PATENTSCHRIFT

(11) **EP 2 691 266 B1**
(45) Veröffentlichungstag und Bekanntmachung des Hinweises auf die Patenterteilung: **02.09.2015**
(21) Anmeldenummer: 12709854.9
(22) Anmeldetag: 15.03.2012
(51) Int. Cl.: B60Q 3/02, H05B 37/02, H05B 33/08

(54) **SCHIENENFAHRZEUGLEUCHTENMODUL**
RAIL VEHICLE LIGHT MODULE
MODULE LUMINEUX POUR VÉHICULE SUR RAILS

(30) Priorität: 29.03.2011 AT 4392011
(43) Veröffentlichungstag der Anmeldung: 05.02.2014
(73) Patentinhaber: Siemens AG Österreich, 1210 Wien (AT)
(72) Erfinder: SPRENGNAGEL, Albin, A-1110 Wien (AT); ULREICH, Klaus, A-7423 Pinkafeld (AT)
(74) Vertreter: Maier, Daniel Oliver
(86) Internationale Anmeldenummer: PCT/EP2012/054562
(87) Internationale Veröffentlichungsnummer: WO 2012/130622

(56) Entgegenhaltungen:
- WO-A2-2006/042050
- US-A1- 2010 109 530
- US-B2- 7 661 848
- PERILSTEIN F M ED - WOLF E J ET AL: "Standardization of locomotive/railcar auxiliary devices", PROCEEDINGS OF THE 2000 ASME/IEEE JOINT RAILROAD CONFERENCE. NEWARK, NJ, APRIL 4 - 6, 2000; [PROCEEDINGS OF THE ASME/IEEE JOINT RAILROAD CONFERENCE], NEW YORK, NY : IEEE, US, 4. April 2000 (2000-04-04), Seiten 83-94, XP010512396, DOI: 10.1109/RRCON.2000.869991 ISBN: 978-0-7803-6328-1

## Beschreibung

### Technisches Gebiet

Die Erfindung betrifft ein Schienenfahrzeugleuchtenmodul.

### Stand der Technik

Die Beleuchtung des Passagierraums von Schienenfahrzeugen erfolgt üblicherweise mittels Leuchtenbändern im Bereich der Decke des Passagierraums, wobei diese Leuchtenbänder aus einzelnen Leuchten (Leuchtenmodulen) zusammengesetzt sind. Dabei sind für die Beleuchtung von Passagierräumen Mindestwerte sowie Gleichmäßigkeitswerte der Beleuchtungsstärke mittels Normen (z. B. EN 13272) vorgegeben.

Das Steuern der Innenbeleuchtung von Passagierschienenfahrzeugen erfolgt üblicherweise von einer zentralen Instanz eines Zuges oder eines einzelnen Waggons aus. Dabei wird die Innenbeleuchtung meist als Ganzes bzw. in Gruppen ein- bzw. ausgeschaltet. In den Abteilen von Fernverkehrswagen ist meist eine individuelle Beleuchtungsregelung jedes Abteils vorgesehen. Im Nahverkehr, besonders jedoch in U-Bahnen, die im Streckenverlauf unterirdisch als auch oberirdisch verkehren wird üblicherweise die Innenbeleuchtung kontinuierlich eingeschaltet. Dadurch ist sichergestellt, dass die Beleuchtungsstärke zu jedem Zeitpunkt den Normerfordernissen für den Betrieb von Bahnen entspricht.

Üblicherweise werden die einzelnen Leuchten unterschiedlichen Stromkreisen zugeordnet, um im Fehlerfall bessere Redundanz zu erzielen. Diese Zuordnung erfolgt meist durch feste Verdrahtung bei Montage der Leuchte und kann nachträglich nur mehr mit erheblichem Aufwand verändert werden.

Eine Notbeleuchtung erfolgt gebräuchlicherweise dadurch, dass ein Teil (ca. 1/3) der Leuchten aus einer getrennten Energieversorgung, der Notstromversorgung gespeist wird, wobei im Notstrombetrieb die weiteren Leuchten erlöschen. Dies bedingt eine ungleichmäßigere Ausleuchtung des Passagierraums im Notstrombetrieb.

In der internationalen Patentanmeldung WO 2006/042050 A2 ist eine Fahrzeugleseleuchte mit einer nutzerbedienbaren Schaltfunktion und eine Dimmfunktion beschrieben, welche aus zwei getrennten Energieversorgungen speisbar ist. Betrachtungen zu Themen der Standardisierung von Beleuchtungen bei Schienenfahrzeugen, insbesondere der Reduktion des Wartungsaufwands können der Schrift PERILSTEIN F M ED - WOLF E J ET AL: "Standardization of locomotive/railcar auxiliary devices", PROCEEDINGS OF THE 2000 ASME/IEEE JOINT RAILROAD CONFERENCE, NEWARK, NJ, APRIL 4 - 6, 2000; [PROCEEDINGS OF THE ASME/IEEE JOINT RAILROAD CONFERENCE], NEW YORK, NY entnommen werden.

Aus der Patentschrift US 7 661 848 B2) ist eine Fahrzeugeinbauleuchte mit einer Mehrzahl an Leuchtmitteln bekannt, wobei durch deren selektive Aktivierung die Richtung des abgegebenen Lichts beeinflusst werden kann. Weiters beschreibt dieses Dokument eine Leuchtstärkeregelung, welche eine in die Fahrzeugeinbauleuchte integrierte Bedieneinrichtung umfasst.

### Darstellung der Erfindung

Der Erfindung liegt daher die Aufgabe zugrunde, ein Schienenfahrzeugleuchtenmodul anzugeben, welches Licht mit mehreren vorgebbaren Leuchtstärkenstufen erzeugen kann und welches nur minimalen Arbeitsaufwand zur elektrischen Installation bedarf und welches einfach an unterschiedliche Fahrzeugtypen anpassbar ist.

Die Aufgabe wird durch ein Schienenfahrzeugleuchtenmodul mit den Merkmalen des Anspruchs 1 gelöst. Vorteilhafte Ausgestaltungen sind Gegenstand untergeordneter Ansprüche.

Dem Grundgedanken der Erfindung nach wird ein Schienenfahrzeugleuchtenmodul beschrieben, welches mindestens ein Leuchtmittel, mindestens einen Eingang zur elektrischen Energiezuführung, mindestens einen elektrischen Steuereingang und eine Steuereinrichtung umfasst, wobei die an dem mindestens einen Steuereingang anliegenden Signale an die Steuereinrichtung geführt sind und die Steuereinrichtung so ausgebildet ist, den jeweiligen Steuersignalzuständen entsprechende Leuchtstärken des mindestens einen Leuchtmittels einzustellen.

Dadurch ist der Vorteil erzielbar, ein Schienenfahrzeugleuchtenmodul realisieren zu können, welches mehrere bestimmte unterschiedliche Leuchtstärken abgeben kann, wobei dafür fahrzeugseitig nur minimale schaltungstechnische Vorkehrungen erforderlich sind. Insbesondere ist es vorteilhaft, dass fahrzeugseitig keine Leistungselektronik vorzusehen ist. Fahrzeugseitig ist es ausreichend, binäre Steuersignale an das erfindungsgemäße Schienenfahrzeugleuchtenmodul zu leiten.

In einer bevorzugten Ausführungsform der Erfindung ist eine der Leuchtstärkestufen als Aus-Stellung vorgesehen, in welcher die Leuchtmittel kein Licht abgeben. Dadurch ist der Vorteil erzielbar, ein Schienenfahrzeugleuchtenmodul ausschalten zu können ohne die Energieversorgung unterbrechen zu müssen. Jedenfalls ist keine Schalteinrichtung für das betriebsmäßige, häufige Schalten der Leuchtenmodule erforderlich, allenfalls eine Einrichtung zur Spannungsfreischaltung für Wartungszwecke, z. B. ein Leitungsschutzschalter ist vorzusehen.

Eine vorteilhafte Ausführungsform des Schienenfahrzeugleuchtenmoduls sieht vor, einen Steuereingang als Notlichtsteuereingang einzusetzen. Ist dieser Notlichtsteuereingang nicht mit einem Steuersignal beaufschlagt, so stellt die Steuereinrichtung des Schienenfahrzeugleuchtenmoduls eine bestimmte Leuchtstärke, die Notlichtleuchtstärke ein, wobei die Signale aller weiteren Steuereingänge von der Steuereinrichtung des Schienenfahrzeugleuchtenmoduls unberücksichtigt bleiben.

Eine weitere vorteilhafte Ausführungsform des Schienenfahrzeugleuchtenmoduls sieht mehrere Energiezuführungen vor, wobei das Schienenfahrzeugleuchtenmodul eine Schaltvorrichtung umfasst mittels welcher eine Auswahl der Energiequelle vorgenommen wird. Bei dem Einbau eines solchen Schienenfahrzeugleuchtenmoduls wird die Schaltvorrichtung so gestellt, dass das Schienenfahrzeugleuchtenmodul Energie aus einer Energiezuführung entnimmt. Insbesondere ist dabei vorteilhaft, dass bei Anordnung in einer Reihe von Schienenfahrzeugleuchtenmodulen (Leuchtenband) eine Zuordnung einzelner Leuchten zu bestimmten Stromkreisen einfach möglich ist und diese Zuordnung auch ohne Verdrahtungsaufwand änderbar ist. Obwohl die Energieversorgung der solcherart ausgeführten Schienenfahrzeugleuchtenmodule aus verschiedenen Stromkreisen bezogen wird, erfolgt die Steuerung der Leuchtstärke (bzw. das Ein-/Ausschalten und die Steuerung des Notlichtbetriebs) über für alle Schienenfahrzeugleuchtenmodule gemeinsame Steuerleitungen.

Es ist empfehlenswert, die Schienenfahrzeugleuchtenmodulen so auszuführen, dass mehrere Module zu einem Leuchtenband zusammenfügbar, insbesondere zusammensteckbar sind. Dazu ist ein Schienenfahrzeugleuchtenmodul sowohl an den Energieanschlüssen als auch an den Steueranschlüssen jeweils mit einer Weiterleitung dieser Signale bzw. Energiezuführungen an ein weiters Schienenfahrzeugleuchtenmodul auszustatten. Dabei sind diese Anschlüsse so auszuführen, dass mehrere Module zu einem Leuchtenband anfügbar sind. Diese Anschlüsse können lösbar (Steckverbindungen, Schraubverbindungen, etc.) oder unlösbar ausgeführt werden.

Eine weitere Ausführungsform der Erfindung sieht vor, den Übergang zwischen unterschiedlichen Leuchtstärkestufen stufenlos zu gestalten. Dazu sind in der Steuereinrichtung eines Schienenfahrzeugleuchtenmoduls entsprechende Schaltungsteile vorzusehen, welche bei einem über die Steuersignale vorgegebenen Wechsel der Leuchtstärke diesen Leuchtstärkenübergang stufenlos erfolgen lassen. Dieser Leuchtstärkeübergang kann in so feinen Stufen erfolgen, dass diese einzelnen Leuchtstärkestufen für die Passagier ununterscheidbar sind oder in gröberen Abstufungen, welche für die Passagiere unterscheidbar sind.

Als Leuchtmittel können alle in Schienenfahrzeugen gebräuchlichen Leuchtmittel eingesetzt werden, welche für den Betrieb mit unterschiedlicher Leuchtstärke geeignet sind. Neben den veralteten und im Allgemeinen nicht mehr gebräuchlichen Glühlampen eignen sich Leuchtstofflampen sowie lichtemittierende Dioden (LED) besonders gut. Ebenso ist der Einsatz von organischen Leuchtdioden (OLED) vorteilhaft. In Abhängigkeit von dem eingesetzten Leuchtmittel ist die jeweilige Schaltung eines Schienenfahrzeugleuchtenmoduls auszuführen.

Eine weitere Ausführungsform der Erfindung sieht vor, die Lichtfarbe der Leuchtmittel mittels der Steuereingangssignale einzustellen. Diese Einstellung der Lichtfarbe der Leuchtmittel kann unabhängig von der Einstellung der Leuchtstärke erfolgen. Dabei ist es vorteilhaft, einen Teil der für die Leuchtstärkeeinstellung bestimmten Steuersignale für die Einstellung der Lichtfarbe vorzusehen. Ebenso ist es vorteilhaft, zusätzliche Steuersignale zur Steuerung der Lichtfarbe vorzusehen. Dadurch ist der Vorteil erzielbar, jede vorgesehene Lichtfarbe mit jeder einstellbaren Leuchtstärke einsetzen zu können.

In weiterer Fortbildung der Erfindung ist vorgesehen, jeder einstellbaren Lichtfarbe eine bestimmte Leuchtstärke zuzuweisen welche von der Steuereinrichtung des Lampenmoduls automatisch beim Aufruf einer bestimmten Lichtfarbe eingestellt wird. Dadurch ist der Vorteil erzielbar, bestimmte, sogenannte "Lichtstimmungen" einstellen zu können. Beispielsweise kann somit die Passagierraumbeleuchtung in den Morgenstunden eine andere Beleuchtungssituation (Lichtfarbe und Leuchtstärke) aufweisen als in den Mittags- oder Abendstunden.

### Kurzbeschreibung der Zeichnungen

Es zeigen beispielhaft:
**Fig.1** Ein Schienenfahrzeugleuchtenmodul.
**Fig.2** Ein Prinzipschaltbild eines Schienenfahrzeugleuchtenmoduls.

### Ausführung der Erfindung

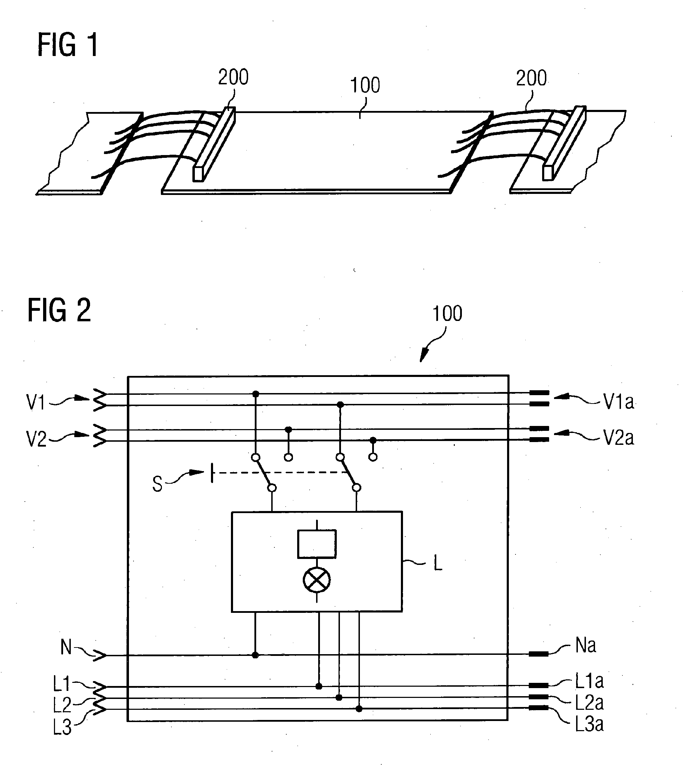

**Fig.1** zeigt beispielhaft und schematisch ein Schienenfahrzeugleuchtenmodul. Es ist ein Schienenfahrzeugleuchtenmodul 100 in Verbindung mit weiteren Modulen dargestellt. Diese Schienenfahrzeugleuchtenmodule 100 stellen gemeinsam ein Leuchtenband dar. Es sind elektrische Steckverbindungen 200 vorgesehen, welche jedes Schienenfahrzeugleuchtenmodul 100 mit dem jeweils folgenden Modul elektrisch verbinden. Diese elektrische Steckverbindungen 200 sind mehrpolig ausgeführt und übermitteln alle Signale und Energieversorgungen die zum Betrieb eines Schienenfahrzeugleuchtenmoduls 100 erforderlich sind.

**Fig.2** zeigt beispielhaft und schematisch ein Prinzipschaltbild eines Schienenfahrzeugleuchtenmoduls. Es ist ein Schienenfahrzeugleuchtenmodul 100 dargestellt, welches eine erste elektrische Energiezuführung V1 und eine zweite elektrische Energiezuführung V2 aufweist. Diese elektrischen Energiezuführungen sind an jeweils einen zugehörigen Energieausgang V1a, V2a geleitet, an welchen ein weiteres Schienenfahrzeugleuchtenmodul 100 elektrisch anschließbar ist. Weiters umfasst das

Schienenfahrzeugleuchtenmodul 100 drei Steuereingänge L1, L2, L3, deren Eingangssignale an jeweils entsprechende Steuerausgänge L1a, L2a, L3a geleitet sind, an welchen ein weiteres Schienenfahrzeugleuchtenmodul 100 elektrisch anschließbar ist. Weiters ist ein Notlichtsteuereingang N vorgesehen, dessen Eingangssignal an einen Notlichtsteuerausgang Na geleitet ist, an welchen ein weiteres Schienenfahrzeugleuchtenmodul 100 elektrisch anschließbar ist. Diese Energie- und Steuereingänge V1, V2, L1, L2, L3, N sowie die Energie- und Steuerausgänge V1a, V2a, L1a, L2a, L3a, Na können jeweils getrennt oder als gemeinsame Steckverbindung ausgeführt sein.

Die Signale der Steuereingänge L1, L2, L3, N sind an eine Lampeneinheit L zugeführt. Die Lampeneinheit L umfasst die zum Betrieb eines oder mehrerer Leuchtmittel erforderlichen Schaltungen, insbesondere Schaltungen, welche den Zustand der binären Steuereingänge L1, L2, L3 sowie des Notlichtsteuereingangs N erfassen und in Abhängigkeit von den jeweiligen Signalpegel dieser Eingänge die Leuchtstärke des Leuchtmittels einstellen. Dazu ist in der Lampeneinheit L eine Steuereinrichtung vorgesehen. Die Energieversorgung der Lampeneinheit L erfolgt alternativ aus der ersten elektrischen Energieversorgung V1 oder der zweiten elektrischen Energieversorgung V2. Zur Umschaltung der Energieversorgung zwischen diesen beiden Quellen ist eine Schaltvorrichtung S vorgesehen.

### Liste der Bezeichnungen

- 100: Schienenfahrzeugleuchtenmodul
- L: Lampeneinheit
- V1: erste elektrische Energiezuführung
- V2: zweite elektrische Energiezuführung
- V1a: erste elektrische Energiezuführung Ausgang
- V2a: zweite elektrische Energiezuführung Ausgang
- S: Schaltvorrichtung
- N: Notlichtsteuereingang
- Na: Notlichtsteuerausgang
- L1: Steuereingang 1
- L2: Steuereingang 2
- L3: Steuereingang 3
- L1a: Steuerausgang 1
- L2a: Steuerausgang 2
- L3a: Steuerausgang 3
- 200: elektrische Steckverbindung

## Patentansprüche

1. Schienenfahrzeugleuchtenmodul (100), umfassend mindestens ein Leuchtmittel (L), einen ersten Eingang zu einer ersten elektrischen Energiezuführung (V1), einen zweiten Eingang zu einer zweiten elektrischen Energiezuführung (V2), eine Steuereinrichtung, einen Notlichtsteuereingang (N) und mindestens einen elektrischen Steuereingang (L 1, L2, L3), wobei der Notlichtsteuereingang (N) und der mindestens eine Steuereingang eingerichtet sind, Steuersignale zu empfangen,
**dadurch gekennzeichnet, dass**
das Schienenfahrzeugleuchtenmodul (100) ferner eine Schaltvorrichtung (S) aufweist, die eingerichtet ist, eine Energieversorgung des Schienenfahrzeugleuchtenmoduls (100) zwischen der ersten elektrischen Energiezuführung (V1) und der zweiten elektrischen Energiezuführung (V2) umzuschalten,
wobei die Steuereinrichtung in Abhängigkeit von den an dem Notlichtsteuereingang (N) und an dem mindestens einen Steuereingang (L1, L2, L3) anliegenden Steuersignalen eine jeweiligen Steuersignalzuständen entsprechende Leuchtstärke des mindestens einen Leuchtmittels einstellt, und
wobei im Fall, dass der Notlichtsteuereingang (N) nicht mit einem Steuersignal beaufschlagt ist, die Steuereinrichtung eine bestimmte Notlichtleuchtstärke einstellt und die Steuersignale an den weiteren Steuereingänge (L1, L2, L3) irrelevant sind.

2. Schienenfahrzeugleuchtenmodul (100) nach Anspruch 1,
**dadurch gekennzeichnet, dass**
der erste Eingang zu einer ersten elektrischen Energiezuführung (V1) und der zweite Eingang zu einer zweiten elektrischen Energiezuführung (V2) jeweils an Ausgänge des ersten und des zweiten elektrischen Energiezuführung (V1 a, V2a) geleitet sind, und der Notlichtsteuereingang (N) und der mindestens eine Steuereingang (L1, L2, L3) jeweils an Steuerausgänge (Na, L1a, L2a, L3a) geleitet sind.

3. Schienenfahrzeugleuchtenmodul (100) nach Anspruch 2,
**dadurch gekennzeichnet, dass**
das Schienenfahrzeugleuchtenmodul (100) zur Anreihung an ein weiteres Schienenfahrzeugleuchtenmodul (100) ausgebildet ist.

4. Schienenfahrzeugleuchtenmodul (100) nach einem der Ansprüche 1 bis 3,
**dadurch gekennzeichnet, dass**
als Leuchtmittel mindestens eine lichtemittierende Diode vorgesehen ist.

5. Schienenfahrzeugleuchtenmodul (100) nach einem der Ansprüche 1 bis 3,
**dadurch gekennzeichnet, dass**
als Leuchtmittel mindestens eine organische lichtemittierende Diode vorgesehen ist.

## Claims

1. Rail vehicle light module (100), comprising at least one lamp (L), a first input for a first electrical energy feed (V1), a second input for a second electrical energy feed (V2), a control device, an emergency light control input (N) and at least one electrical control input (L1, L2, L3), wherein the emergency light control input (N) and the at least one control input are configured to receive control signals,
**characterised in that**
the rail vehicle light module (100) also has a switching facility (S) which is configured to switch an energy supply of the rail vehicle light module (100) between the first electrical energy feed (V1) and the second electrical energy feed (V2),
wherein the control device, depending on the control signals present at the emergency light control input (N) and at the at least one control input (L1, L2, L3), sets a luminosity of the at least one lamp corresponding to one of the respective control signal states, and
wherein, in the event of the emergency light control input (N) not having a control signal applied to it, the control device sets a specific emergency light luminosity and the control signals at the further control inputs (L1, L2, L3) are irrelevant.

2. Rail vehicle light module (100) according to claim 1,
**characterised in that**
the first input for a first electrical energy feed (V1) and the second input for a second electrical energy feed (V2) are each conducted to outputs of the first and second electrical energy feed (V1a, V2a) and the emergency light control input (N) and the at least one control input (L1, L2, L3) are each conducted to control outputs (Na, L1a, L2a, L3a).

3. Rail vehicle light module (100) according to claim 2,
**characterised in that**
the rail vehicle light module (100) is embodied to be arranged next to a further rail vehicle light module (100).

4. Rail vehicle light module (100) according to one of claims 1 to 3,
**characterised in that**
at least one light emitting diode is provided as the lamp.

5. Rail vehicle light module (100) according to one of claims 1 to 3,
**characterised in that**
at least one organic light emitting diode is provided as the lamp.

## Revendications

1. Module lumineux pour véhicules sur rails (100), comprenant au moins un agent lumineux (L), une première entrée pour un premier approvisionnement en énergie électrique (V1), une deuxième entrée pour un deuxième approvisionnement en énergie électrique (V2), un dispositif de commande, une entrée de commande de lumière de secours (N) et au moins une entrée de commande électrique (L1, L2, L3), dans lequel l'entrée de commande de lumière de secours (N) et l'au moins une entrée de commande sont conçues pour recevoir des signaux de commande,
**caractérisé en ce que**
le module lumineux pour véhicules sur rails (100) présente en outre un dispositif de commutation (S), qui est conçu pour commuter une alimentation en énergie du module lumineux pour véhicules sur rails (100) entre le premier approvisionnement en énergie électrique (V1) et le deuxième approvisionnement en énergie électrique (V2), dans lequel le dispositif de commande règle une luminosité de l'au moins un agent lumineux et correspondant à des états de signaux de commande respectifs en fonction des signaux de commande présents au niveau de l'entrée de commande de lumière de secours (N) et au niveau de l'au moins une entrée de commande (L1, L2, L3), et
dans lequel dans le cas où l'entrée de commande de lumière de secours (N) n'est pas alimentée avec un signal de commande, le dispositif de commande règle une certaine luminosité de lumière de secours et les signaux de commande au niveau des autres entrées de commande (L1, L2, L3) ne sont pas déterminants.

2. Module lumineux pour véhicules sur rails (100) selon la revendication 1,
**caractérisé en ce que**
la première entrée pour un premier approvisionnement en énergie électrique (V1) et la deuxième entrée pour un deuxième approvisionnement en énergie électrique (V2) sont respectivement dirigées vers des sorties du premier et du deuxième approvisionnement en énergie électrique (V1a, V2a), et l'entrée de commande de lumière de secours (N) et l'au moins une entrée de commande (L1, L2, L3) sont respectivement dirigées vers des sorties de commande (Na, L1a, L2a, L3a).

3. Module lumineux pour véhicules sur rails (100) selon la revendication 2,
**caractérisé en ce que**
le module lumineux pour véhicules sur rails (100) est constitué pour être ajouté à un module lumineux pour véhicules sur rails (100) supplémentaire.

4. Module lumineux pour véhicules sur rails (100) selon l'une des revendications 1 à 3,
**caractérisé en ce que**
comme agent lumineux il est prévu au moins une diode électroluminescente.

5. Module lumineux pour véhicules sur rails (100) selon l'une des revendications 1 à 3,
**caractérisé en ce que**
comme agent lumineux il est prévu au moins une diode électroluminescente organique.
